(19) **Europäisches Patentamt / European Patent Office / Office européen des brevets**

(11) **EP 1 353 500 B1**

(12) **EUROPEAN PATENT SPECIFICATION**

(45) Date of publication and mention
of the grant of the patent:
**25.07.2007 Bulletin 2007/30**

(51) Int Cl.:
*H04N 3/15* (2006.01)

(21) Application number: **03075989.8**

(22) Date of filing: **03.04.2003**

(54) **Image sensor**

Bildsensor

Capteur d'images

(84) Designated Contracting States:
**AT BE BG CH CY CZ DE DK EE ES FI FR GB GR HU IE IT LI LU MC NL PT RO SE SI SK TR**

(30) Priority: **05.04.2002 GB 0208021**

(43) Date of publication of application:
**15.10.2003 Bulletin 2003/42**

(73) Proprietor: **CSEM Centre Suisse d'Electronique et de Microtechnique SA**
**2007 Neuchâtel (CH)**

(72) Inventors:
• **Tanner, Steve**
**1400 Yverdon (CH)**
• **Blanc, Nicholas**
**8942 Oberrieden (CH)**

(74) Representative: **Andrews, Arthur Stanley**
**Reddie & Grose,**
**16 Theobalds Road**
**London WC1X 8PL (GB)**

(56) References cited:
**EP-A- 0 905 788          EP-A- 1 117 249**
**US-A- 6 002 432          US-A- 6 130 423**

• **PAIN B ET AL: "ANALYSIS AND ENHANCEMENT OF LOW-LIGHT-LEVEL PERFORMANCE OF PHOTODIODE-TYPE CMOS-ACTIVE PIXEL IMAGERS OPERATED WITH SUB-THRESHOLD RESET" WORKSHOP ON CCDS AND AIS, XX, XX, June 1999 (1999-06), pages 140-143, XP001034926**

## Description

The invention relates to an image sensor and to an imager comprising an array of such sensors.

Integrated circuits are being designed with lower supply voltages and that results in lower signal voltage swings and to maximise the signal voltage swing it is desirable to reduce the voltages dropped across the transistors.

A prior art image sensor is described in a paper entitled "A Single-chip Programmable Digital CMOS Imager with Enhanced Low-light Detection Capability" by Bedabrata Pain, Guang Yuang, Monica Ortiz, Kenneth McCarty, Bruce Hancock, Julie Heynssens, Thomas Cunningham, Chris Wrigley and Charlie Ho, 13th International Conference on VLSI Design, Calcutta, India, January 4-7, 2000.

The invention provides an image sensor comprising a photosensitive element one side of which is connected to a first voltage; a reset transistor for resetting the potential at the other side of the photosensitive element to a given value; a source follower transistor whose gate is coupled to the other side of the photosensitive element, whose drain is connected to a second voltage, and whose source is connected via a load to the first voltage; and means for driving the reset transistor so that the given value is greater than the potential of the second voltage.

By resetting the photosensitive element to a voltage greater than the second voltage the voltage drop across the source follower can be reduced from VTn (or about 0.7 volts) to VDsatn (or about 0.2 volts). It should be noted that these are typical figures and that VTn is

The invention relates to an image sensor and to an imager comprising an array of such sensors.

Integrated circuits are being designed with lower supply voltages and that results in lower signal voltage swings and to maximise the signal voltage swing it is desirable to reduce the voltages dropped across the transistors.

A prior art image sensor is described in a paper entitled "A Single-chip Programmable Digital CMOS Imager with Enhanced Low-light Detection Capability" by Bedabrata Pain, Guang Yuang, Monica Ortiz, Kenneth McCarty, Bruce Hancock, Julie Heynssens, Thomas Cunningham, Chris Wrigley and Charlie Ho, 13th International Conference on VLSI Design, Calcutta, India, January 4-7, 2000.

EP-A-0905788 discloses a photoelectric conversion device having a plurality of pixel cells each of which includes a photoelectric conversion element, a field effect transistor having the gate area for storing signal charge generated by the photoelectric conversion element and the source-drain path for outputting a signal corresponding to the signal charge stored in the gate, a first power supply line for supplying electric power to the field effect transistor, and a first switch connected between the field effect transistor and the first power supply line, when a reset voltage for resetting the gate of the field effect transistor is $V_{sig0}$, a threshold voltage of the field effect transistor is $V_{th}$, current flowing through the field effect transistor is $I_a$, a voltage applied via the first power supply line is $V_{cl}$, and a series resistance of the first switch is $R_{on}$, each pixel is configured to satisfy a condition determined by

$$V_{c1} - R_{on} \times I_a > V_{sig0} - V_{th} .$$

EP-A-1117249 discloses an active pixel sensor soft reset circuit for reducing image lag while maintaining low reset kTC noise. The circuit pulls down the sensor potential to a sufficiently low level before the soft reset function is completed. The level to which the sensor potential is pulled is set between 0 and the critical potential at which the reset transistor will be on when the soft reset function begins. The timing of the pull down function is such that the sensor is stabilised at the low potential before the soft reset function completes. In one embodiment, the sensor potential is pulled down using a pull-down circuit, which may consist of a CMOS type inverter. In another embodiment, the sensor potential is pulled down by the bit line. Two ways in which the bit line may be pulled down are natural discharge, or by increasing the bias on the loading transistor. Two ways in which the bias on the loading transistor may be increased are a biasing circuit, or by using a pull-down transistor. The active pixel sensor may be implemented with any suitable sensor technology, such as photodiode, photogate, or pinned diode.

The invention provides an image sensor comprising a photosensitive element one side of which is connected to a first voltage; a reset transistor for resetting the potential at the other side of the photosensitive element to a given value; a source follower transistor whose gate is coupled to the other side of the photosensitive element, whose drain is connected to a second voltage, and whose source is connected via a load to the first voltage; and means for driving the reset transistor so that the given value is greater than the potential of the second voltage plus the threshold voltage $V_{th}$ of the source follower transistor.

By resetting the photosensitive element to a voltage greater than the second voltage the voltage drop across the source follower can be reduced from VTn (or about 0.7 volts) to VDsatn (or about 0.2 volts). It should be noted that these are typical figures and that VTn is process dependent whereas VDsatn is design dependent. When the supply voltage is 1.2 volts this is a significant reduction.

Further additional, optional, or advantageous features are disclosed in the claims appended hereto to which reference should now be made.

The above and other features and advantages of the invention will be apparent from the following description, by way of example, of an embodiment of the invention with reference to the accompanying drawings, in which;-

Figure 1 is a circuit diagram of a first embodiment of an image sensor according to the invention,

Figure 2 is a circuit diagram of a second embodiment of an image sensor according to the invention,

Figure 3 shows control waveforms applied to the image sensor,

Figure 4 shows waveforms at selected points within the sensor of Figure 2, and

Figure 5 shows an array of image sensors.

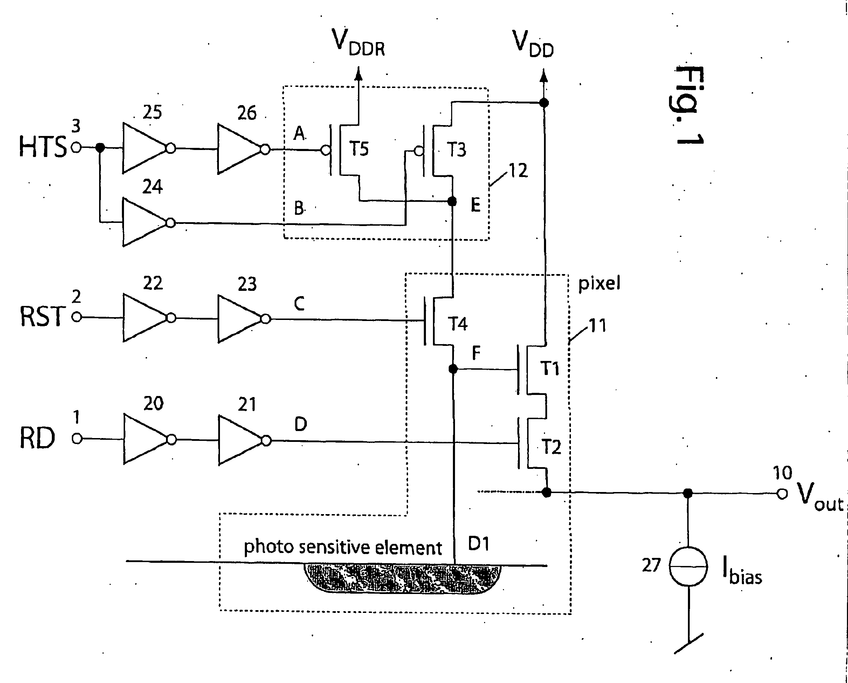

As shown in Figure 1 an image sensor comprises a photosensitive element in the form of a photodiode D1 connected between a first voltage which in the implementation of Figure 1 is earthed and the gate electrode of an n channel field effect transistor T1 connected as a source follower. The source electrode of transistor T1 is connected via the source drain path of an n channel field effect transistor T2 whose drain electrode is connected to an output terminal 10. The drain electrode of transistor T1 is connected to a second voltage $V_{DD}$. The source electrode of a p channel field effect transistor T3 is connected to the supply voltage $V_{DD}$ while its drain electrode is connected via the drain source path of an n channel field effect transistor T4 whose drain electrode is connected to the gate electrode of transistor T1. A second p channel field effect transistor T5 has its source electrode connected to a third supply voltage $V_{DDR}$ and its drain electrode connected to the drain electrode of transistor T3. Transistors T1, T2, T4 and diode D1 form a pixel element 11 while transistors T3 and T5 form a reset circuit 12.

An input terminal 1 receives a row select signal which is fed via two inverters 20 and 21 to the gate electrode of transistor T2. A further input terminal 2 receives a pixel reset signal which is fed via two inverters 22 and 23 to the gate electrode of transistor T4. A further terminal 3 receives a hard reset signal which is fed via an inverter 24 to the gate electrode of transistor T3 and via two inverters 25 and 26 to the gate electrode of transistor T5. A current source 27 is connected between the first voltage and the terminal 10.

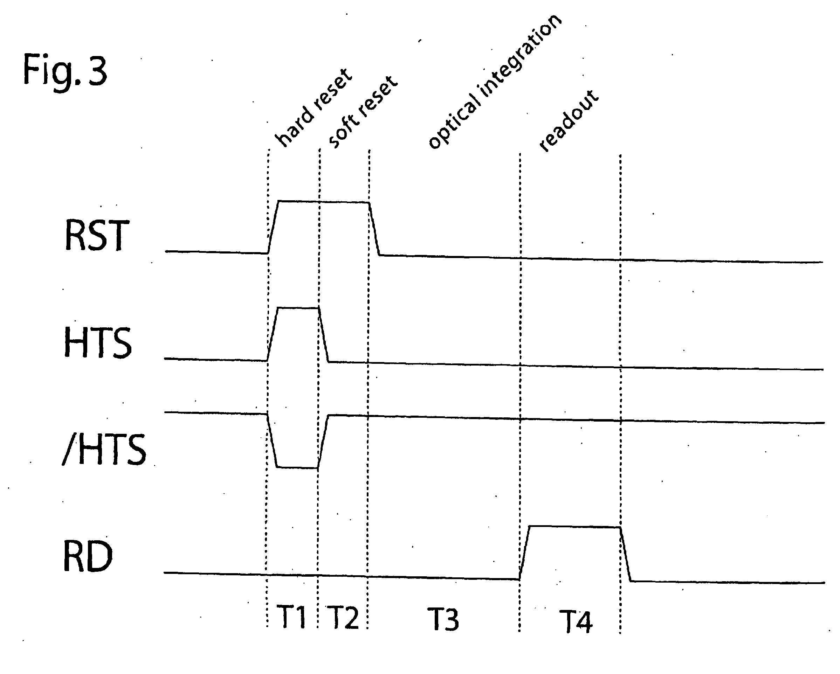

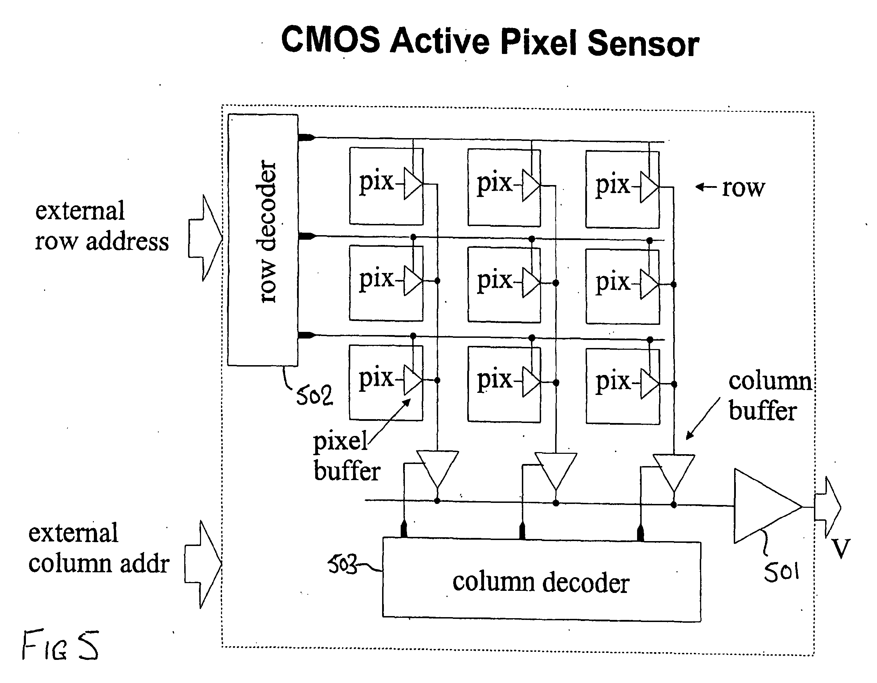

The image sensor shown in Figure 1 is designed to form part of an image sensor array such as that shown in Figure 5 which operates in a column parallel (row-wise) fashion. Following the exposure of the pixel for an integration time T3 as shown in Figure 3 it is selected by pulsing RD high in Figure 3, RD being the potential applied to terminal 1. This causes the potential at the sense node F in Figure 1 and which reflects the photoelectrons accumulated during the integration time to be passed to the terminal 10 via the source follower transistor T1 and the pixel select transistor T2. The readout of the pixel takes place during time period T4 as shown in Figure 3.

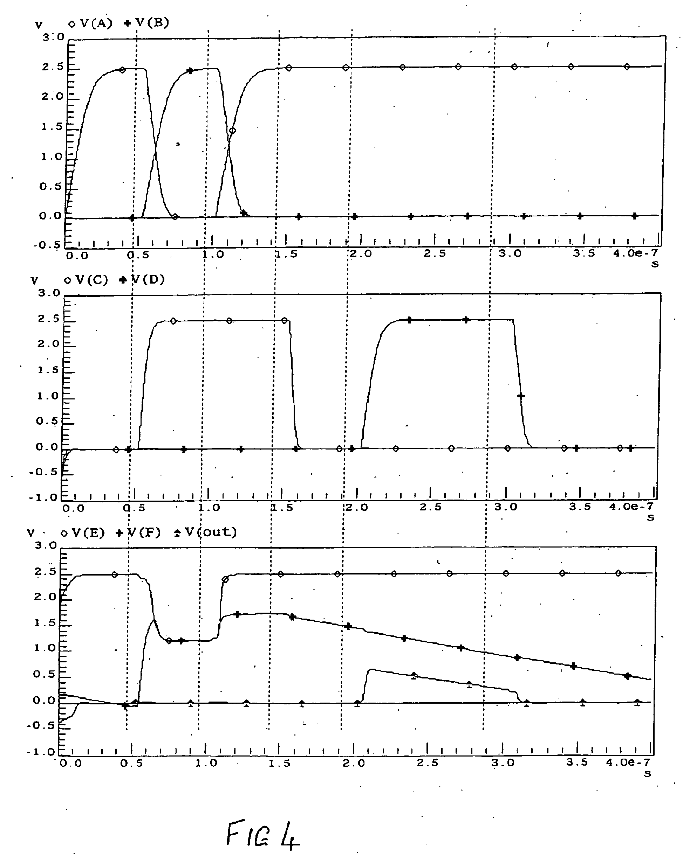

Prior to the integration time T3 a reset procedure is carried out on the pixel to reset the photosensitive element to a given state. This is effected using the reset circuit 12 via the transistor T4. The reset signal RST applied to terminal 2 is high during time periods T1 and T2 as shown in Figure 3. The signal HST applied to terminal 3 is high during time period T1 and low at all other times. Consequently, the transistor T5 is switched on at all times apart from when the input HTS is high. Conversely, the transistor T3 is switched off when the signal HTS is low and is switched on when the signal HTS is high. This can be seen from waveform V(E) in Figure 4 where it can be seen that the drain of transistor T4 is connected to the potential VDDR when the signal HTS is low and to the supply VDD via transistor T3 when HTS is high. Thus during the first phase in time period T1 the drain of the transistor T4 is connected to the supply voltage VDD which may, for example be 1.2 volts, through the p channel transistor T3. Consequently, since the gate voltage of transistor T4 is 2.5 volts the photodiode is fully reset to 1.2 volts through a hard reset operation. During the second phase, that is time T2 when the signal HTS is low, a soft reset is produced as the drain of the reset transistor T4 is connected to a reset voltage VDDR having a value of 2.5 volts. Since this reset voltage is the same as that of the gate of the reset transistor T4 a soft reset is performed.

In the paper by Pain *et al* a soft reset scheme is described but there is only one supply voltage line for the pixel, the reset and source follower transistors have the same drain connection. The reset gate voltage is not higher than the pixel supply voltage. In the first phase where the signal HTS is high the pixel supply voltage is connected to $V_{DD}$ through an NMOS transistor with its gate connected to $V_{DD}$. Consequently, the pixel supply voltage is reduced by VTn and since the gate voltage of the reset transistor is $V_{DD}$ a hard reset is performed. In the second phase where the signal HTS is low the pixel supply voltage is connected to $V_{DD}$ through a PMOS transistor whose gate is connected to $V_{SS}$. Therefore the pixel supply voltage is equal to $V_{DD}$ and also equal to the reset transistor gate voltage.

In the pixel shown in Figure 1 the photodiode D1 is charged at a voltage higher than the drain voltage of the source follower transistor T1. The difference is about 0.4 to 0.5 volts higher than the supply voltage $V_{DD}$. This overdrive of the source follower transistor T4 enables an improved signal voltage swing at the output of the pixel 10. In the embodiment shown by Pain *et al* the photodiode would be reset to a voltage equal to $V_{DD}$. Consequently, the maximum voltage at node Vout is $V_{DD}$ - VTn where VTn is the threshold voltage of the source follower transistor T1. The minimum voltage at node Vout is given by the saturation voltage VDsatn of the current source 25. This gives a maximum voltage at terminal 10 of $V_{DD}$ - VTn and a minimum voltage at output 10 of $V_{SS}$ + VDsatn. If $V_{DD}$ equals 1.2 volts, VDsatn equals 0.2 volts, and VTn equals 0.7 volts, then the maximum voltage swing at output 10 is equal to 0.4 volts.

Conversely, if the photodiode D1 is reset to a supply voltage higher than $V_{DD}$ the VTn voltage drop can be eliminated. This gives a maximum voltage at output 10 of $V_{DD}$ - VDsatn and a minimum voltage of output 10 at $V_{SS}$ + VDsatn. Using the same values for $V_{DD}$ and VDsatn, this gives a maximum voltage swing at terminal 10 of 0.8 volts. Thus by charging the photodiode to a voltage higher than the drain voltage of the source follower the maximum output voltage swing is significantly increased.

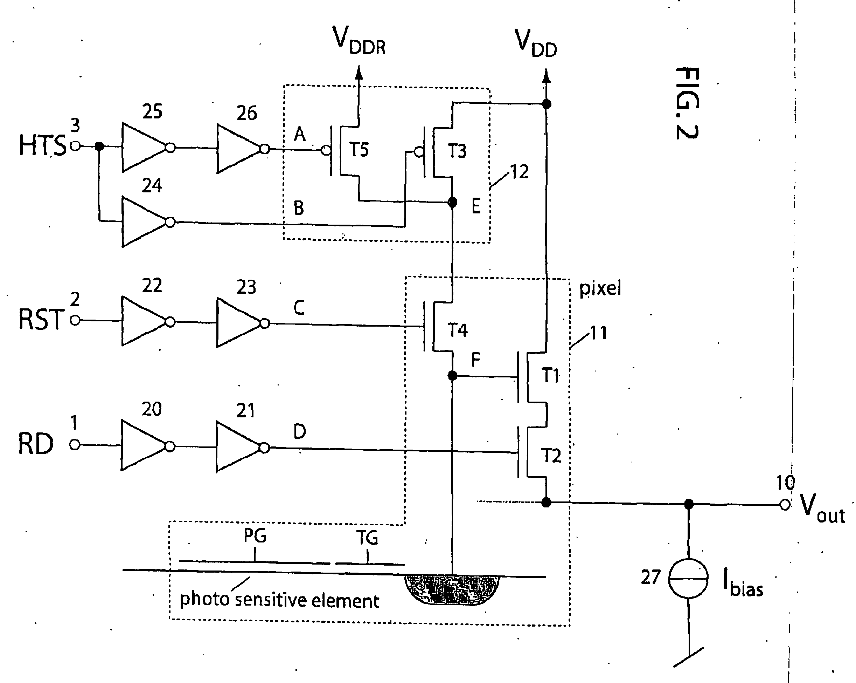

Figure 2 shows a second embodiment of an image sensor according to the invention. It is similar to the embodiment of Figure 1, the difference being that instead of the photosensitive element being a photodiode it is a photogate. The photogate PG is connected via a transfer gate TG to the node F which is a floating diffusion that is connected to the gate of transistor T1. In other respects the embodiment of Figure 2 is identical to that of Figure 1 and consequently no further description of the embodiment of Figure 2 will be given.

Figure 4 shows the voltage waveforms at the nodes A, B, C, D, E, F and the Vout, that is terminal 10. It should be noted that the voltages quoted are typical voltages used presently in large scale integrated circuits using CMOS technology. They are not to be taken as limiting in any form the scope of the present invention. The actual voltages used will depend on the state of CMOS technology at the time of manufacture.

Figure 5 shows how the pixel sensor shown in Figures 1 and 2 can be integrated into an array of pixel sensors. As shown in Figure 5, each pixel element in the array includes a buffer circuit for reading out the pixel charges into a column buffer and from there into an output buffer 501. A row decoder 502 and column decoder 503 are provided. The row decoder 502 will provide the signal RD applied to input 1 of the pixel element to cause the accumulated charge to be read out onto the column busses to enable each pixel to read into its associated column buffer. The column decoder 503 produces signals causing the respective column buffer to read into the output buffer 501 to enable the pixel charges to be read out serially from the sensor.

As can be seen from the foregoing description, a basic three transistor scheme is used for each pixel. Any suitable photosensitive element can be used as the sensor. The two examples of a photodiode and a photogate are merely examples and not limitative. The concept of overdriving the source follower transistor T1 and the reset scheme using a voltage higher than that of the supply voltage to the pixel enables a larger output voltage swing to be obtained from each pixel sensor.

## Claims

1. An image sensor for use in a pixel array comprising a photosensitive element (D1) one side of which is connected to a first voltage; a reset transistor (T4) for resetting the potential at the other side of the photosensitive element (D1) to a given value; a source follower transistor (T1) whose gate is coupled to the other side of the photosensitive element (D1), whose drain is connected to a second voltage (VDD), and whose source is connected via a load (27) to the first voltage; a select transistor (T2) having its drain source path connected between the source of the source follower (T1) and the load (27) and its gate connected to a select input (1); and means for driving the reset transistor (T4) so that the given value is greater than the potential of the second voltage (VDD).

2. A sensor as claimed in Claim 1 in which the reset transistor (T4) is connected as a source follower and the means for driving the reset transistor (T4) comprises means for applying a potential greater than that of the second voltage to the gate and drain of the reset transistor.

3. A sensor as claimed in Claim 2 in which the reset (T4) and source follower (T1) transistors are n channel field effect transistors and the means for driving the reset transistor (T4) comprises a first p channel field effect transistor (T3) whose drain is connected to the drain of the reset transistor (T4) and whose source is connected to the second voltage (VDD), a second p channel field effect transistor (T5) whose drain is connected to the reset transistor (T4) and whose source is connected to a potential (VDDR) greater than that of the second voltage (VDD), means (2) for applying a reset pulse whose amplitude is greater than that of the second voltage (VDD) to the gate of the reset transistor (T4), means for causing the first p channel transistor (T3) to connect the drain of the reset transistor (T4) to the second voltage (VDD) for a first portion of the reset pulse, and means for causing the second p channel transistor (T5) to connect the drain of the reset transistor (T4) to the source potential of the second p channel transistor (T5) for the remainder of the reset pulse.

4. A sensor as claimed in Claim 3 in which the amplitude of the reset pulse is equal to the amplitude of the source potential of the second p channel transistor (T5).

5. An imager comprising a two dimensional array of image sensors as claimed in any of Claims 1 to 4, a row decoder (502) and a column decoder (503) for enabling the charge accumulated by each pixel to be read out sequentially.

**Patentansprüche**

1. Bildsensor für die Verwendung in einer Pixelarray, der Folgendes umfasst: ein lichtempfindliches Element (D1), von dem eine Seite mit einer ersten Spannung verbunden ist; einen Reset-Transistor (T4) zum Zurücksetzen des Potenzials auf der anderen Seite des lichtempfindlichen Elementes (D1) auf einen bestimmten Wert; einen Source-Folger-Transistor (T1), dessen Gate mit der anderen Seite des lichtempfindlichen Elementes (D1) gekoppelt ist, dessen Drain mit einer zweiten Spannung (VDD) verbunden ist und dessen Source über eine Last (27) mit der ersten Spannung verbunden ist; einen Auswahltransistor (T2), dessen Drain-Source-Pfad zwischen der Source des Source-Folgers (T1) und der Last (27) geschaltet und dessen Gate mit einem Auswahleingang (1) verbunden ist; und Mittel zum Ansteuern des Reset-Transistors (T4), so dass der bestimmte Wert größer ist als das Potenzial der zweiten Spannung (VDD).

2. Sensor nach Anspruch 1, bei dem der Reset-Transistor (T4) als Source-Folger geschaltet ist und das Mittel zum Ansteuern des Reset-Transistors (T4) Mittel zum Anlegen eines Potenzials umfasst, das größer ist als das der zweiten Spannung zu Gate und Drain des Reset-Transistors.

3. Sensor nach Anspruch 2, bei dem der Reset-Transistor (T4) und der Source-Folger-Transistor (T1) n-Kanal-Feldeffekttransistoren sind und das Mittel zum Ansteuern des Reset-Transistors (T4) Folgendes umfasst: einen ersten p-Kanal-Feldeffekttransistor (T3), dessen Drain mit dem Drain des Reset-Transistors (T4) und dessen Source mit der zweiten Spannung (VDD) verbunden ist, einen zweiten p-Kanal-Feldeffekttransistor (T5), dessen Drain mit dem Reset-Transistor (T4) und dessen Source mit einem Potenzial (VDDR) verbunden ist, das größer ist als das der zweiten Spannung (VDD), Mittel (2) zum Anlegen eines Rücksetzimpulses, dessen Amplitude größer ist als die der zweiten Spannung (VDD) zum Gate des Reset-Transistors (T4), Mittel zum Bewirken, dass der erste p-Kanal-Transistor (T4) den Drain des Reset-Transistors (T4) mit der zweiten Spannung (VDD) für einen ersten Teil des Rücksetzimpulses verbindet, und Mittel zum Bewirken, dass der zweite p-Kanal-Transistor (T5) den Drain des Reset-Transistors (T4) mit dem Source-Potenzial des zweiten p-Kanal-Transistors (T5) für den Rest des Rücksetzimpulses verbindet.

4. Sensor nach Anspruch 3, bei dem die Amplitude des Rücksetzimpulses gleich der Amplitude des Source-Potenzials des zweiten p-Kanal-Transistors (T5) ist.

5. Bildwandler, der eine zweidimensionale Matrix von Bildsensoren nach einem der Ansprüche 1 bis 4, einen Reihendecoder (502) und einen Spaltendecoder (503) umfasst, so dass die von jedem Pixel akkumulierte Ladung sequenziell ausgelesen werden kann.

**Revendications**

1. Capteur d'images destiné à être utilisé dans un réseau de pixels comprenant un élément photosensible (D1) dont un côté est connecté à une première tension ; un transistor de remise à l'état initial (T4) pour remettre le potentiel de l'autre côté de l'élément photosensible (D1) à une valeur donnée, un transistor à source chargée (T1) dont la grille est couplée à l'autre côté de l'élément photosensible (D1), dont le drain est connecté à une seconde tension (VDD), et dont la source est connectée par l'intermédiaire d'une charge (27) à la première tension ; un transistor de sélection (T2) ayant son chemin drain source connecté entre la source du transistor à source chargée (T1) et la charge (27) et sa grille connectée à une entrée de sélection (1) ; et un moyen pour commander le transistor de remise à l'état initial (T4) de telle sorte que la valeur donnée soit supérieure au potentiel de la seconde tension (VDD).

2. Capteur selon la revendication 1, dans laquelle le transistor de remise à l'état initial (T4) est connecté à un transistor à source chargée et le moyen pour commander le transistor de remise à l'état initial (T4) comprend un moyen pour appliquer un potentiel supérieur à celui de la seconde tension à la grille et au drain du transistor de remise à l'état initial.

3. Capteur selon la revendication 2, dans lequel les transistors de remise à l'état initial (T4) et à source chargée (T1) sont des transistors à effet de champ à canal n et le moyen pour commander le transistor de remise à l'état initial (T4) comprend un premier transistor à effet de champ à canal p (T3) dont le drain est connecté au drain du transistor de remise à l'état initial (T4) et dont la source est connectée à la seconde tension (CDD), un second transistor à effet de champ à canal p (T5) dont le drain est connecté au transistor de remise à l'état initial (T4) et dont la source est connectée à un potentiel (CDDR) supérieur à celui de la seconde tension (VDD), un moyen (2) pour appliquer une impulsion de remise à l'état initial dont l'amplitude est supérieure à celle de la seconde tension (VDD) à la grille du transistor de remise à l'état initial (T4), un moyen pour amener le premier transistor à canal p (T3) à connecter le drain du transistor de remise à l'état initial (T4) à la seconde tension (VDD) pendant une première partie de l'impulsion de remise à l'état initial, et un moyen pour amener le second transistor à canal p (T5) à connecter le drain du transistor de remise à l'état initial (T4) au potentiel de source du second transistor à canal p (T5) pendant le reste de l'impulsion de remise à l'état initial.

4. Capteur selon la revendication 3, dans lequel l'amplitude de l'impulsion de remise à l'état initial est égale à l'amplitude du potentiel de source du second transistor à canal p (T5).

5. Imageur comprenant un réseau bidimensionnel de capteurs d'images selon l'une quelconque des revendications 1 à 4, un décodeur de rangées (502) et un décodeur de colonnes (503) pour permettre la lecture séquentielle de la charge accumulée par chaque pixel.

Fig. 1

FIG. 2

Fig. 3

EP 1 353 500 B1

FIG 4

# CMOS Active Pixel Sensor

external row address

external column addr

Fig 5

row decoder

pix→ pix→ pix→ ← row

pix→ pix→ pix→

502 pix→ pix→ pix→ column buffer

pixel buffer

503 column decoder 501

V

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0905788 A

- EP 1117249 A

### Non-patent literature cited in the description

- **BEDABRATA PAIN ; GUANG YUANG ; MONICA ORTIZ ; KENNETH MCCARTY ; BRUCE HANCOCK ; JULIE HEYNSSENS ; THOMAS CUNNINGHAM ; CHRIS WRIGLEY ; CHARLIE HO.** A Single-chip Programmable Digital CMOS Imager with Enhanced Low-light Detection Capability. *13th International Conference on VLSI Design,* 04 January 2000